(19) Europäisches Patentamt
European Patent Office
Office européen des brevets

(11) EP 2 292 669 B1

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(51) Int Cl.:
***C08F 20/18*** *(2006.01)* ***C08F 2/38*** *(2006.01)*

(21) Anmeldenummer: **10171349.3**

(22) Anmeldetag: **30.07.2010**

(54) **VERFAHREN ZUR HERSTELLUNG VON POLYACRYLATEN**

METHOD FOR MANUFACTURING POLYACRYLATES

PROCÉDÉ DE FABRICATION DE POLYACRYLATES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **12.08.2009 DE 102009036967**

(43) Veröffentlichungstag der Anmeldung:
**09.03.2011 Patentblatt 2011/10**

(73) Patentinhaber: **tesa SE**
**22848 Norderstedt (DE)**

(72) Erfinder:
- **Beschmann, Jennifer**
  **53343 Adendorf (DE)**
- **Prenzel, Alexander**
  **22529 Hamburg (DE)**

(56) Entgegenhaltungen:
**EP-A1- 1 484 342 WO-A1-99/20669**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 292 669 B1

## Beschreibung

Die Erfindung betrifft ein Verfahren zur Herstellung von Polyacrylaten mittels freier radikalischer Polymerisation, wobei Thiol- und/oder Hydroxygruppen enthaltende natürliche oder unnatürliche Aminosäuren als nicht-toxische und nichtflüchtige Kettenregler zur Regelung der Molmassen und Molmassenverteilung verwendet werden, sodass das bei der Polymerisation verwendete Lösungsmittel nach dem Entfernen desselben bei einem Trocknungsprozess oder bei der Herstellung eines Polyacrylathotmelts für weitere Polymerisationen wiederverwertet werden kann, ohne dass mit steigender Zahl an Recyclingschritten sich die Molmassen und Molmassenverteilung der Polyacrylate ändert.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel steigen. Hotmeltverfahren sind bereits für SIS-Klebemassen Stand der Technik. Dagegen werden Acrylathaftklebemassen immer noch zu großen Anteilen aus der Lösung verarbeitet. Hier bereitet ein zu hohes mittleres Molekulargewicht immer noch Probleme, da es zum einen zwar essentiell für eine hohe Scherfestigkeit ist, zum anderen aber die Fließviskosität stark ansteigen lässt, so dass sich Acrylathotmelts mit einem mittleren Molekulargewicht von > 1.000.000 g/mol nur schwer aus der Schmelze verarbeiten lassen.

Dagegen ist die Umsetzung von niedermolekularen Acrylathotmelts als Haftschmelzklebemassen bereits gelungen (BASF AG, z.B. UV 203 AC Resins). Hier werden Benzophenon- oder Acetophenonderivate als acrylierter Photoinitiator in die Acrylatpolymerkette eingebaut und anschließend mit UV-Strahlung vernetzt [US 5,073,611]. Dennoch ist die erzielbare Scherfestigkeit mit solchen Systemen noch nicht zufriedenstellend, wenn auch die Fließviskosität durch das geringe mittlere Molekulargewicht (≈ 250.000 g/mol) relativ niedrig ist.

Für die Herstellung von höhermolekularen Acrylathaftklebemassen (mittleres Molekulargewicht zwischen 250.000 g/mol und 1.000.000 g/mol) benötigt man spezielle Polymerisationsverfahren. In Substanz kann nicht polymerisiert werden, da ab einem gewissen Zeitpunkt die Fließviskosität zu hoch wird und der Umsatz der Reaktion nur sehr gering ist. Die verbleibenden Restmonomere würden den Hotmeltprozess stören. Daher werden Acrylatmonomere konventionell in Lösung polymerisiert und dann im Aufkonzentrationsextruder aufkonzentriert [EP 0621 326 B1].

Dennoch bereitet die Aufkonzentration dieser Acrylathaftklebemasse Probleme, da aus umwelttechnischen Gründen häufig Lösungsmittelgemische, wie z.B. Siedegrenzbenzin und Aceton, eingesetzt werden (Stand der Technik). Toluol steht im Verdacht, kanzerogen zu sein, und wird daher nicht mehr eingesetzt. Ein Lösungsmittelgemisch führt im Aufkonzentrationsprozess zu keinem kontinuierlichen Siedepunkt, so dass das Lösemittel nur sehr schwer auf einen Anteil von unter 0,5 % (Gewichtsprozent bezogen auf das Polymer) entzogen werden kann. Daher wird versucht, Acrylate in nur einem Lösemittel und mit einem Regler zu polymerisieren. Der Regler erfüllt die Aufgaben, die Vergelung zu vermeiden, das mittlere Molekulargewicht herabzusetzen, die Exothermie in der Startphase abzufangen, die Molekulargewichtsverteilung herabzusetzen und dennoch einen hohen Umsatz zu gewährleisten.

In der Regel werden als Regler Thiole, Alkohole oder Halogenide, wie z.B. Tetrabromkohlenstoff, eingesetzt [vgl. beispielsweise H.-G. Elias, "Makromoleküle", Hüthig & Wepf Verlag Basel, 5. Auflage, 1990]. Die Verwendung von Halogeniden als Regler, wie zum Beispiel in der US 7034085 B2 beschrieben, nimmt allerdings aus umwelttechnischen Gründen beständig ab. Thiole und Alkohole eignen sich als Regler und setzen - je nach Konzentration - das mittlere Molekulargewicht des Polymers deutlich herab. Jedoch haben diese häufig den Nachteil, dass sie flüchtig sind und sich somit nach dem Entfernen des Lösungsmittelgemisches im Destillat befinden. Hieraus ergeben sich die Nachteile, dass die Wiederverwendung des abdestillierten Lösungsmittelgemisches für weitere Polymerisationen zu einer Anreicherung der Verbindung mit einer Kettenregleraktivität führt und somit mit steigender Recyclingrate eine reproduzierbare Molmassenverteilung nicht gewährleistet ist.

Die US 20070299226 A1 beschreibt verschiedene Kettenregler basierend auf einer Thiolfunktionalität. Diese verbleiben zwar teilweise im Polymer, haben jedoch den Nachteil, dass sie teilweise toxisch sind und aufgrund ihres starken und unangenehmen Geruches nicht geeignet sind, wenn das Polymer für ein Produkt, wie zum Beispiel ein Haftklebeband, verwendet wird, mit dem es im Alltag häufiger Berührungspunkte gibt. Weiterhin werden in der gleichen Schrift mehrfachfunktionelle Thiole als Regler beschrieben, doch können diese schon zu einer Vernetzung des Polymers und folglich zu hohen Schmelzeviskositäten führen, sodass die Verarbeitung aus der Schmelze nicht mehr möglich ist. Die in der EP 1 311 554 B1 beschriebenen mercaptofunktionalisierten Photoinitiatoren führen ebenfalls zu einer Vernetzung bzw. muss darauf geachtet werden, dass das Polymer vor der Verarbeitung keinem Licht oder anderer elektromagnetischer Strahlung ausgesetzt wird, das es sonst zu einer Vernetzung kommen kann.

Die WO 99/20669 A beschreibt aminosäurefunktionalisierte Polymere, die für eine graft-Copolymerisation genutzt werden. Diese Polymere sind erhältlich durch freie radikalische Polymerisation einer Mischung enthaltend ethylenisch ungesättigte Monomere, beispielsweise Acrylmonomere, und als Kettenüberträger eine thiosubstituierte Aminosäure. Die Verarbeitung von Polyacrylaten aus der Schmelze ist hingegen nicht genannt, ebenso nicht die Herstellung von Haftklebemassen.

Die EP 1 484 342 A beschreibt ein kontinuierliches Verfahren zur polymerschonenden Herstellung von lösemittelfreien Polyacrylat-Schmelzhaftklebern unter Wiedereinsatz des verwendeten Lösemittels. Bei diesem Verfahren werden folgende Schritte durchgeführt:

- Polymerisation einer Selbsthaftklebemasse in Lösung, wobei das Lösungsmittel einen niedrigen Dampfdruck aufweist;
- kontinuierliches Vermischen der Polymerlösung mit Antioxidantien und siedefreies Vor-wärmen der Mischung unter erhöhtem Druck.
- Aufkonzentration der Polymerlösung zu einem Restlösemittelgehalt von weniger als 0,1 Gew.-% in einem Aufkonzentrationsextruder unter Einfluss von Vakuum und erhöhten Temperaturen;
- Kondensation, Auffangen und Wiedereinsatz des im Extruder abgezogenen Lösemittels;
- Compoundierung des oben genannten vom Lösemittel befreiten Schmelzhaftklebers mit klebrigmachenden Harzen, Füllstoffen, Stabilisatoren, Vernetzern oder anderen Additiven in einem zweiten Extruder bei mäßiger Schmelztemperatur;
- Übergabe der fertig abgemischten lösungsmittelfreien Selbsthaftklebemasse an eine nachfolgende Beschichtungseinheit.

Aufgabe der Erfindung ist es, die Herstellung von Polyacrylaten in Hinblick auf die Rückgewinnung des Lösungsmittels zu optimieren.
Vorteilhaft sollten Polyacrylatmassen mit ausreichend hohen mittleren Molekulargewichten erhältlich sein, so dass diese beispielsweise als Haftklebemassen verwendet werden können. Das bei der Herstellung der Polyacrylate verwendete Lösungsmittel bzw. Lösungsmittelgemisch sollte bevorzugt ohne Reinigungsschritte nach dem Abdestillieren wiederverwertet werden können; und die Verarbeitbarkeit des Polyacrylats im Heißschmelzprozess sollte gewährleistet sein.
Die Aufgabe konnte hervorragend gelöst werden durch die Verwendung von Verbindungen der folgenden allgemeinen Strukturformel (A)

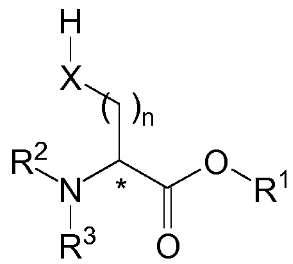

wobei $R^1$, $R^2$ und $R^3$ unabhängig voneinander gewählt sind, und wobei

- $R^1$ gewählt wird aus der Gruppe (i) umfassend

  (i) lineare und verzweigte $C_1$- bis $C_{18}$-Alkylreste, lineare und verzweigte $C_2$- bis $C_{18}$-Alkenylreste, lineare und verzweigte $C_2$- bis $C_{18}$-Alkinylreste, Arylreste, Cycloaliphatische, aliphatische und aromatische Heterocyclen, Wasserstoff,

- $R^2$ und $R^3$ gewählt werden aus der vorstehenden Gruppe (i) oder aus der Gruppe (ii), umfassend:
  (ii) Acylreste, insbesondere Alkanoylreste und Cycloalkancarbonylreste und Arencarbonylreste (-C(O)-R'), Alkoxycarbonylreste (-C(O)-O-R'), Carbamoylreste (-C(O)-NR'R"), Sulfonylreste ($-SO_2R'$),
  wobei R' und R" unabhängig voneinander gewählte Reste aus der Gruppe (i) sind,
- X gewählt wird als Sauerstoff (O), Schwefel (S) oder Selen (Se), und
- der Buchstabe n in der Abbildung die Länge der Kohlenwasserstoffkette angibt;

wobei n ist eine natürliche Zahl einschließlich Null ist; insbesondere gilt $0 \leq n \leq 18$ als Reglersubstanzen bei der radikalischen Polymerisation von Acryl- und/oder Methacrylmonomeren bei der Herstellung von Polyacrylaten, insbesondere von Monomermischungen enthaltend zumindest 70 Gew.-% zumindest eines Acrylsäure- und/oder Methacrylsäureesters.
Dementsprechend betrifft der Anspruch 1 ein Verfahren zur Herstellung einer Haftklebemasse, wobei in Polyacrylat aus einer Reaktionslösung, umfassend ein oder mehrere Lösungsmittel und ein oder mehrere Monomere durch radikalische Polymerisation hergestellt wird, wobei die Lösungsmittel zumindest zu 50 Gew.-% organische Lösungsmittel

sind, und wobei weiterhin die Monomere zumindest zu 70 Gew.-% Acrylsäure- und/oder Methacrylsäureester sind, und wobei in der Reaktionslösung weiterhin zumindest ein Polymerisationsregler enthalten ist. Dabei wird zumindest eines der organsichen Lösungsmittel, insbesondere werden alle organischen Lösungsmittel aus einem Recyclingprozess entnommen, und als Polymerisationsregler wird eine Verbindung der allgemeinen Strukturformel (A) entsprechend der vorstehenden Definition eingesetzt. Das Lösungsmittel wird nach der Polymerisation aus dem Polymerisationsprodukt bis zu einem Restlösungsmittelanteil von nicht mehr als 2 % entfernt, wobei der Polymerisationsregler bei der Entfernung des Lösungsmittels in dem Polymerisationsprodukt verbleibt. Das entfernte Lösungsmittel wird dem Receclingprozess zugeführt und das Polymerisationsprodukt aus der Schmelze weiterverarbeitet.

Es kann ein einzelnes organisches Lösungsmittel oder ein Lösungsmittelgemisch mehrerer organischer Lösungsmittel, gegebenenfalls auch mit Wasser, eingesetzt werden. Der Gewichtsanteil organischer Lösungsmittel bei Anwesenheit von Wasser an dem eingesetzten Lösungsmittelgemisch beträgt mindestens 50 Gew.-%, vorteilhaft mindestens 90 Gew.-%.

Sehr vorteilhaft ist die Reaktionslösung eine homogene Lösung.

Die Verbindungen der Strukturformel (A) weisen ein stereogenes Zentrum auf (gekennzeichnet durch den Stern * in der Abbildung) und sind somit chiral. In einer weiteren vorteilhaften Ausführung der Erfindung werden die Kettenregler als optisch reine Substanz in der (D)- oder (L)-Konfiguration oder als racemisches Gemisch eingesetzt.

Die Verbindungen der Strukturformel (A) dienen bei der radikalischen Polymerisation als Polymerisationsregler. Als Regler, Polymerisationsregler oder auch Reglersubstanzen werden im Rahmen dieser Schrift gleichbedeutend Verbindungen mit hohen Übertragungskonstanten bezeichnet, die bei radikalischen Polymerisationen eingesetzt werden, um den Polymerisationsgrad der entstehenden Makromoleküle zu begrenzen. Dabei zerstören sie nicht die wachstumsfähigen Radikalfunktionalitäten, sondern übernehmen diese von den Enden der wachsenden Makromoleküle, um damit dann selbst das Wachstum einer neuen Kette auszulösen. Auf diese Weise bildet sich pro im System entstandenem Radikal nicht eine lange, sondern zwei oder mehrere kürzere Polymerketten. Da die Reglersubstanz keine Radikale zerstört, bleibt auch die Bruttopolymerisations-geschwindigkeit unverändert (siehe RÖMPP online 2009, Dokumentenkennung RD-18-00666).

Erfindungsgemäß weist die Verbindung der Strukturformel (A) mindestens eine Sulfanylgruppe (im folgenden auch als Thiolgruppen oder -SH-Gruppe bezeichnet), mindestens eine Selanylgruppe (im folgenden auch als -SeH-Gruppe bezeichnet) und/oder eine Hydroxygruppe (im folgenden auch als -OH-Gruppe bezeichnet) auf. In einer günstigen Ausführung der Erfindung sind die vorgenannten Gruppen in der Verbindung der Strukturformel (A) endständig.

Die Reaktionslösung umfasst zumindest ein Monomer auf Acryl- oder Methacrylbasis, eine Monomermischung umfassend mindestens 70 Gew.-% eines Acrylsäure- oder Methacrylsäureesters oder bevorzugt eine Monomermischung umfassend mindestens 70 Gew.-% an Acrylsäure- und/oder Methacrylsäureestern.

Im folgenden werden Acrylsäureester und Methacrylsäureester zusammenfassend auch als Acrylmonomere bezeichnet.

Die Acrylmonomere werden zumindest teilweise, bevorzugt vollständig gewählt aus der Gruppe der Monomere umfassend Verbindungen der allgemeinen Formel

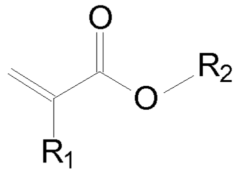

mit

$R_1$ = H oder $CH_3$ und
$R_2$ = H oder ein unverzweigter oder verzweigter, aliphatischer, alicyclischer oder aromatischer, unsubstituierter oder substituierter Kohlenwasserstoffrest mit 1 bis 20 Kohlenstoffatomen. Sehr bevorzugt weist der Alkoholrest der Acrylsäuremonomere keine C=C-Doppelbindungen auf.

Die Monomere lassen sich bei Anwesenheit zumindest eines radikalischen Initiators über eine freie radikalische Polymerisation polymerisieren, wobei die Verbindung der Strukturformel (A) als Polymerisationsregler fungiert.

Für die radikalische Polymersiation können ein oder mehrere übliche Initiatoren eingesetzt werden, wobei insbesondere solche Initiatoren gewählt werden, die mit den Verbindungen der Strukturformel (A) keine ungewollten Nebenreaktionen eingehen. Nach der Polymerisation wird derart vorgegangen, dass das Lösungsmittel aus dem Polymerisationsprodukt entfernt wird. Der Restlösungsmittelanteil wird auf einen Anteil von nicht mehr als 2 Gew.-%, ganz besonders nicht mehr als 0,5 Gew.-%, bezogen auf die nach Entfernung des Lösungsmittels verbleibende Mischung

(Polymerisationsprodukt, Restlösungsmittel, Verbindungen der Strukturformel (A), ggf. weitere Bestandteile), gesenkt. Bevorzugt wird ein lösemittelfreies System angestrebt. Das Polymerisationsprodukt wird aus der Schmelze weiterverarbeitet (sogenanntes "Hotmelt").

Das entfernte Lösungsmittel wird einem Recyclingprozess zugeführt. Das Lösungsmittel, was zur Herstellung der Reaktionslösung eingesetzt wird, kann ganz oder teilweise einem Recyclingprozess entnommen werden. Insbesondere vorteilhaft wird das Lösungsmittel ganz oder teilweise im Kreis geführt, das heißt das entfernte Lösungsmittel nach einer Polymerisation wird ganz oder teilweise zur Herstellung einer Reaktionslösung für eine weitere Polymerisation eingesetzt.

Erfindungsgemäß verbleiben die Verbindung der Strukturformel (A), bzw., sofern der Reaktionslösung mehrere Verbindungen der Strukturformel (A) zugesetzt waren oder wurden, die Verbindungen der Strukturformel (A) bei der Entfernung des Lösungsmittels im Polymerisationsprodukt. Dies kann insbesondere durch Ausfallen als Feststoff geschehen. Somit ist es besonders bevorzugt, wenn in dem entfernten Lösungsmittel, insbesondere in dem in den Recyclingprozess geführten Lösungsmittel, keine Reste der Verbindungen der Strukturformel (A) mehr vorliegen (oder allenfalls in vernachlässigbarer Menge).

Alle nachfolgenden Ausführungen beziehen sich, soweit nicht im Einzelnen abweichend beschrieben, auf alle Aspekte der Erfindung (Reaktionslösung, Herstellverfahren, erhaltenens Polyacrylat und Verwendung der Verbindung der Strukturformel (A) als Reglersubstanz)

Die Monomermischung wird bevorzugt derart gewählt, dass insbesondere weich machende Monomere, weiterhin Monomere mit funktionellen Gruppen, die in der Lage sind, Reaktionen einzugehen, insbesondere Additions- und/oder Substitutionsreaktionen, sowie optional weitere einpolymerisierbare Comonomere, insbesondere hartmachende Monomere. Die Natur des herzustellenden Polyacrylats (insbesondere Haftklebemasse; jedoch auch verwendbar als Heißsiegelmasse oder viskoelastisches nichtklebriges Material) lässt sich insbesondere über eine Variation der Glasübergangstemperatur des Polymers durch unterschiedliche Gewichtsanteile der einzelnen Monomere beeinflussen. Für rein kristalline Systeme gibt es am Schmelzpunkt $T_S$ ein thermisches Gleichgewicht zwischen Kristall und Flüssigkeit. Amorphe oder teilkristalline Systeme sind hingegen durch die Umwandlung der mehr oder weniger harten amorphen bzw. teilkristallinen Phase in eine weichere (gummiartige bis zähflüssige) Phase gekennzeichnet. Am Glaspunkt kommt es insbesondere bei polymeren Systemen zum "Auftauen" (bzw. "Einfrieren" beim Abkühlen) der Brownschen Molekularbewegung längerer Kettensegmente.

Der Übergang vom Schmelzpunkt $T_S$ (auch "Schmelztemperatur"; eigentlich nur für reinkristalline Systeme definiert; "Polymerkristalle") zum Glasübergangspunkt $T_G$ (auch "Glasübergangstemperatur", "Glastemperatur") kann daher als fließend angesehen werden, je nach dem Anteil der Teilkristallinität der untersuchten Probe.

Die Glasübergangstemperatur kann je nach ihrer Messung als dynamische oder als statische Glasübergangstemperatur angegeben werden. Die Angaben der dynamischen Glasübergangstemperaturen beziehen sich auf die Bestimmung mittels dynamisch mechanischer Analyse (DMA) bei geringen Frequenzen (Temperatursweep; Messfrequenz: 10 rad/s; Temperaturbereich: -40 °C bis max. 130 °C; Aufheizrate: 2,5°C/min; Rheometric Scientific RDA III; parallele-Platten-Anordnung, Probendicke 1 mm: Probendurchmesser 25 mm: Vorspannung mit einer Belastung von 3N; Stress der Probenkörper bei allen Messungen 2500 Pa), die der statischen Glasübergangstemperatur und der Schmelzpunkte auf die Bestimmung mittels dynamischer Differenzkalometrie (DSC) gemäß DIN 53765:1994-03.

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur Fox-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige statischen Glasübergangstemperatur des Homopolymers aus den jeweiligen Monomeren n in K (Kelvin).

Zur Anwendung des Polyacrylats als Haftklebemasse sind die Anteile der entsprechenden Komponenten bevorzugt derart gewählt, dass das Polymerisationsprodukt insbesondere eine dynamische Glastemperatur ≤ 15 °C (DMA) aufweist.

Vorzugsweise werden als weich machende und/oder unpolare Monomere Acryl- und Methacrylsäureester mit Kohlenwasserstoffresten, umfassend 4 bis 14 C-Atome, bevorzugt 4 bis 9 C-Atome, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie z. B. 2-Ethylhexylacrylat, 2-Ethylhexylmethacrylat.

Als Monomere mit funktionellen Gruppen werden bevorzugt jene eingesetzt, die aus der folgenden Aufzählung

an Funktionalitäten ausgewählt sind: Carboxy-, Sulfonsäure-, oder Phosphonsäuregruppen, Phenole, Thiole oder Amine. Besonders bevorzugte Beispiele für Monomere sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Diethylaminoethylacrylat, Diethylaminoethylmethacrylat, Dimethylaminoethylacrylat, Dimethylaminoethylmethacrylat.

Weiterhin können prinzipiell im Sinne der Erfindung alle vinylisch-funktionalisierten Verbindungen eingesetzt werden, die mit den zuvor genannten Monomeren copolymerisierbar sind, und können auch zur Einstellung der Eigenschaften der resultierenden Haftklebemasse dienen.

Beispielhaft genannte Monomere sind:

Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methyl-undecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N*,*N*-Dialkyl-substituierte Amide, wie beispielsweise *N*,*N*-Dimethylacrylamid, *N,N*-Dimethylmethacrylamid, *N*-Benzylacrylamide, *N*-Isopropylacrylamid, *N*-tert-Butylacrylamid, *N*-*tert*-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, o- und p-Methylstyrol, o-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(Methylmethacrylat)ethylmethacrylat (Mw von 2000 bis 8000 g/mol).

Die Monomere können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind z.B. Benzoinacrylat- und acrylatfunktionalisierte Benzophenonderivat-Monomere, die eine Vernetzung durch Elektronenbestrahlung unterstützen sind, z.B. Tetrahydrofufurylacrylat, *N*-tert-Butylacrylamid, Allylacrylat wobei diese Aufzählung nicht abschließend ist.

Als radikalische Initiatoren für die freie radikalische Polymerisation können alle für Acrylate hierfür bekannten üblichen Initiatoren eingesetzt werden. Die Produktion von C-zentrierten Radikalen ist im Houben Weyl, Methoden der Organischen Chemie, Vol. E 19a, S. 60 - 147, beschrieben. Diese Methoden können in Analogie angewendet werden. Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-*tert*-butylperoxid, Azodiisosäurebutyronitril, Cyclohexylsulfonylacetylperoxid, Diisopropylpercarbonat, *tert*-Butylperoktoat, Benzpinacol. In einer sehr bevorzugten Variante werden die Initiatoren in mehreren Stufen hinzugegeben, so dass der Umsatz auf über 90 % gesteigert wird. Der in dem Polymer verbleibende Restmonomergehalt kann so auf unter 10 Gew.-% abgesenkt werden; durch einen geringen Restmonomergehalt werden die Eigenschaften des Polyacrylates in Hinblick auf die Weiterverarbeitung im Hotmeltprozeß erheblich verbessert.

Die zur Initiierung der Polymerisation eingesetzten Initiatoren werden dabei bevorzugt derart gewählt, dass sie eine geringe Tendenz zur Ausbildung von Seitenketten in den Polymeren aufweisen, ihre Pfropfwirksamkeit liegt bevorzugt unter einem Wert von $\varepsilon < 5$ bei der Temperatur des Reaktionsgemisches bei Zugabe des Initiators.

Die Initiatoren können vorteilhaft vor oder bei Beginn der Polymerisation zu der Monomerlösung gegeben werden, es kann auch während der Polymerisation mit Initiatoren nachdosiert werden. Die Initiatoren werden bevorzugt zu einem Anteil von 0,001 bis 1 Gew.-%, mehr bevorzugt von 0,025 bis 0,1 Gew.-%, bezogen auf das Monomerengemisch, in der reaktionslösung, eingesetzt.

Die absolute Pfropfwirksamkeit (Crosslink-Effizienz) ist definiert als die Zahl der chemischen Seitenkettenbildungen pro 100 Mol-Einheiten an zersetztem Initiator. In Analogie zu van Drumpt und Oosterwijk [Journal of Polymer Science,

Polymer Chemistry Edition 1976, 14 1495 - 1511] lässt sich ein Wert für diese Zahl durch Bestimmung der Dimeren in einer definierten Lösung des Initiators angeben, siehe auch DE 43 40 297 A1:
Eine genau 0,1 molare Lösung des Initiators in n-Pentadecan wird in einer He-Atmosphäre zersetzt. Die Reaktionszeit wird so gewählt, dass sie dem Zehnfachen der bei der gewählten Temperatur gegebenen Halbwertszeit des jeweiligen Initiators entspricht. Dadurch ist ein praktisch vollständiger Zerfall des Initiators gewährleistet. Anschließend wird der Anteil an entstandenem dimeren Pentadecan mittels GLC gemessen. Der prozentuale Anteil ε wird als Maß für die Pfropfwirksamkeit angegeben. Üblicherweise wählt man die Reaktionstemperatur so, dass die Halbwertszeit des zu prüfenden Initiators bei dieser Temperatur 15 min beträgt.
Hohe ε-Werte für die Pfropfwirksamkeit bedeuten eine hohe Tendenz des Initiators, bei der Polymerisation Seitenketten zu bilden, kleine ε-Werte resultieren hingegen in bevorzugt linearen Polymeren.

In einer bevorzugten Vorgehensweise des Verfahrens sieht der Verfahrensablauf wie folgt aus:

- Als Reaktionslösung wird eine zumindest 50%ige Lösung der Monomere unter Zusatz des Initiators bzw. der Initiatoren und der Verbindung bzw. Verbindungen der Strukturformel (A), welche mindestens eine Thiol-, Selanyl- und/oder Hydroxyfunktionalität enthält, eingesetzt,
- in einem Temperaturbereich von 50 °C bis 90 °C wird die radikalische Polymerisation durchgeführt,
- während der Polymerisation wird mindestens einmal mit einem Initiator für radikalische Polymerisationen mit geringer Tendenz zur Seitenkettenbildung (Pfropfwirksamkeit ε < 5 bei der aktuellen Reaktionstemperatur) nachinitiiert,
- gegebenenfalls wird die Reaktion durch Verdünnung der Reaktionslösung je nach Viskosität des Polymerisats gesteuert,
- eine kontrollierte Nachinitiierung findet mit bis zu 2 Gew.-%, bezogen auf das Monomerengemisch, eines Initiators mit erhöhter Tendenz zur Seitenkettenbildung (Pfropfwirksamkeit ε > 10 bei der aktuellen Reaktionstemperatur) statt,
- wobei die Polymerisation bis zu einem Umsatz > 90 %, bevorzugt > 95 % durchgeführt wird.

Bevorzugte Initiatoren mit einem geringen ε-Wert (ε < 5) sind solche, deren Radikale wegen ihres geringen Energiegehaltes keine oder nur selten Wasserstoffabstraktion an den Polymerketten verursachen. Bevorzugt werden hier zum Beispiel Azoinitiatoren wie Azoisobuttersäuredinitril oder dessen Derivate, beispielsweise 2,2-Azobis-(2-methylbutyronitril) (Vazo® 67, DuPont), verwendet.

Initiatoren mit einer hohen Seitenkettenbildungstendenz (hoher ε-Wert > 10) liefern bereits bei relativ niedrigen Temperaturen hohe Pfropfausbeuten. Besonders bevorzugt werden hier Bis-(4-*tert*-Butylcyclohexyl)peroxidicarbonat (Perkadox® 16, Akzo Chemie) oder Dibenzoylperoxid eingesetzt.

Die Polymerisation kann in Gegenwart eines organischen Lösungsmittels oder in Gemischen aus organischen Lösungsmitteln und/oder Gemischen aus organischen Lösungsmitteln mit Wasser durchgeführt werden. Als Lösemittel für die Polymerisation können alle für radikalische Polymerisationen üblicherweise verwendeten oder geeigneten Lösemittel eingesetzt werden, insbesondere bieten sich Aceton, Essigsäureester, Benzin, Toluol oder beliebige Gemische aus diesen Lösemitteln an. Das Lösungsmittel bzw. Lösungsmittelgemisch liegt in der Reaktionslösung in üblichen Mengenbereichen; vorteilhaft zu 20 bis 99 Gew.-%, bezogen auf die Reaktionslösung, vor; sehr bevorzugt wird aber so wenig Lösungsmittel wie möglich eingesetzt. Die Polymerisationszeit beträgt - je nach Umsatz, Temperatur und Initiierung - zwischen 6 und 48 h.
Die hergestellten, insbesondere haftklebenden, Polyacrylate haben ein mittleres Molekulargewicht zwischen 250.000 und 1.000.000 g/mol, wobei das mittlere Molekulargewicht durch SEC oder GPC gemessen wird (Messung siehe experimenteller Teil). Die hergestellten (Co)Polymere besitzen generell gleiche oder etwas engere Molekulargewichtsverteilungen wie die analog mit konventionellen Reglern durchgeführten Polymerisationen. Die Polydispersität kann auf einen Wert von weniger als 6 herabgesetzt werden. Durch die relativ enge Molekulargewichtsverteilung sinkt die Fließviskosität des Polyacrylates (insbesondere der Haftklebemasse), und das Polyacrylat lässt sich bedeutend einfacher als Hotmelt verarbeiten (geringere Temperatur zum Aufschmelzen erforderlich, höherer Durchsatz für die Aufkonzentration).

Durch das erfindungsgemäße Verfahren lassen sich Polyacrylate, insbesondere Haftklebemassen mit den gewünschten Haftklebeeigenschaften sehr gut herstellen.

In einer weiteren vorteilhaften Variante des erfinderischen Verfahrens werden die Thiol-, Sulfanyl- und/oder Hydroxygruppen enthaltenden Verbindungen der Strukturformel (A) mit einem Gewichtsanteil von 0,001 % bis 5 %, insbesondere von 0,005 % bis 0,25 %, eingesetzt.

Für die Verwendung der nach dem erfinderischen Verfahren hergestellten Polyacrylate als Haftklebemassen werden die Polyacrylate zur Optimierung optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9-sowie andere Kohlenwasserstoffharze. Beliebige Kombinationen dieser und weiterer Harze

können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwickung werden zu der Haftklebemasse ein oder mehrere Weichmacher, wie z.B. niedermolekulare Polyacrylate, Phthalate, Walöweichmacher (wasserlösliche Weichmacher) oder Weichharze hinzudosiert. In einer bevorzugten Weiterentwicklung werden für Acrylathotmelts Phosphate/Polyphosphate eingesetzt.

Die Acrylathotmelts können des Weiteren mit einem oder mehreren Additiven wie Alterungsschutzmitteln, Lichtschutzmitteln, Ozonschutzmitteln, Fettsäuren, Harzen, Keimbildnern, Blähmitteln, Compoundierungsmitteln und/oder Beschleunigern abgemischt sein.

Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein.

Insbesondere für die Verwendung als Haftklebemasse ist es für das erfinderische Verfahren vorteilhaft, wenn das Polyacrylat bevorzugt aus der Lösung auf einen Träger oder auf ein Trägermaterial als Schicht aufgebracht wird.

Eine günstige Weiterentwicklung des erfinderischen Verfahrens liegt vor, wenn die wie im vorhergehenden beschrieben hergestellten Polyacrylate zu einer Polyacrylatmasse aufkonzentriert werden, deren Lösungsmittelgehalt $\leq$ 5 Gew.-%, insbesondere $\leq$ 2 Gew.-% ist. Dieser Prozess findet bevorzugt in einem Aufkonzentrationsextruder statt. Die Polyacrylatmasse wird dann in einer günstigen Variante des Verfahrens als Heißschmelzmasse in Form einer Schicht auf einen Träger oder auf ein Trägermaterial aufgetragen.

Gegenstand der Erfindung sind somit weiterhin ein- oder beidseitig mit Klebemasse ausgerüstete Klebebänder.

In einer besonders vorteilhaften Variante der beiden zuvor dargestellten Verfahren wird das Lösungsmittel bzw. das Lösungsmittelgemisch erneut bei der Polymerisation eingesetzt und die so hergestellten Polymerisate zeigen auch nach einer sehr hohen Rezyklierungsrate des Lösungsmittels bzw. des Lösungsmittelgemisches keine Veränderung der Molmassen sowie der Molmassenverteilung auf.

Für die beiden soeben dargestellten Varianten des erfinderischen Verfahrens werden bevorzugt als Trägermaterialien, beispielsweise für Klebebänder, die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Es ist für die Verwendung als Haftklebemasse besonders günstig, die Polyacrylate nach der Beschichtung auf den Träger oder auf das Trägermaterial zu vernetzen. Zur Herstellung der Haftklebebänder werden die oben beschriebenen Polymere hierzu optional mit Vernetzern abgemischt. Die Vernetzung kann in günstiger Weise thermisch oder durch energiereiche Strahlung, im letzteren Fall insbesondere durch Elektronenstrahlung oder nach Zugabe geeigneter Photoinitiatoren durch ultraviolette Strahlung hervorgerufen werden.

Bevorzugte unter Strahlung vernetzende Substanzen gemäß dem erfinderischen Verfahren sind z.B. bi- oder multifunktionelle Acrylate oder bi- oder multifunktionelle Urethanacrylate, bi- oder multifunktionelle Isocyanate oder bi- oder multifunktionelle Epoxide. Eingesetzt werden können in sehr günstiger Weise ebenfalls Metall-Chelat-Verbindungen. Verwendet werden können hier aber auch alle weiteren, dem Fachmann geläufigen bi- oder multifunktionellen Verbindungen, die in der Lage sind, Polyacrylate zu vernetzen. Als Photoinitiatoren eignen sich bevorzugt Norrish-Typ I- und -Typ II-Spalter, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, wobei diese Aufzählung keinen Anspruch auf Vollständigkeit besitzt.

Im Weiteren wird die Verwendung des nach dem erfinderischen Verfahren hergestellten Polyacrylates als Haftklebemasse beansprucht.

Insbesondere ist die Verwendung der wie beschrieben hergestellten Polyacrylathaftklebemasse für ein Klebeband von Vorteil, wobei die Polyacrylathaftklebemasse ein- oder beidseitig auf einem Träger aufgetragenen sein kann.

## Beispiele

### Testmethoden

Folgende Testmethoden wurden angewendet, um die klebtechnischen als auch generelle Eigenschaften der hergestellten Haftklebemassen zu evaluieren.

180° Klebkrafttest (Test A)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Messergebnisse sind in N/cm angegeben und sind gemittelt aus drei Messungen. Alle Messungen wurden bei Raumtemperatur durchgeführt.

Scherfestigkeit (Test B)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm . 13 mm (Länge . Breite). Anschließend wurde mit 2 kg Anpreßdruck das Klebeband viermal auf den Stahlträger gedrückt. Bei 80 °C wurde ein 1 kg-Gewicht an dem Klebeband befestigt, bei Raumtemperatur ein 1 kg- oder 2 kg-Gewicht. Die gemessenen Scherstandzeiten sind in Minuten angegeben und entsprechen dem Mittelwert aus drei Messungen.

Restmonomergehalt(Test C)

Die analytische Bestimmung des Restmonomergehaltes erfolgt durch Flüssigextraktion der verwendeten Haftklebemassen und anschließender Kapillargaschromatographie.

Rheologie (Test D)

Die Messungen wurden mit dem Gerät Dynamic Stress Rheometer von Rheometrics durchgeführt. Bei 25 °C wurde der Frequenzbereich von 0,1 bis 100 rad/s durchgefahren. Der Temperatursweep wurde bei 10 rad/s in einem Temperaturbereich von -25 °C bis 130 °C gemessen. Alle Experimente wurden mit paralleler Plattenanordnung durchgeführt.

Gelpermeationschromatographie GPC (Test E)

Die Bestimmung des mittleren Molekulargewichtes Mw und der Polydisperistät PD erfolgte durch folgendes Verfahren: Als Eluent wurde THF mit 0,1 Vol.-% Trifluoressigsäure eingesetzt. Die Messung erfolgte bei 25 °C. Als Vorsäule wurde PSS-SDV, 5 $\mu$m, $10^3$ Å ($10^2$ nm), ID 8.0 mm . 50 mm verwendet. Zur Auftrennung wurden die Säulen PSS-SDV, 5 $\mu$m, $10^3$ sowie $10^5$ und $10^6$ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

K-Wert (nach FIKENTSCHER) (Test F):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 1967, 8, 381 ff.)

Herstellung der Beispiele

**Beispiel 1a-c**

Ein für radikalische Polymerisationen konventioneller 2 L-Glasreaktor wurde mit 4 g Acrylsäure, 4 g Maleinsäureanhydrid, 32 g N-tert-Butylacrylamid, 180 g 2-Ethylhexylacrylat, 180 g n-Butylacrylat, 150 g Aceton und

a) 0,2 g *N*-Acetyl-(L)-cystein
b) 0,4 g *N*-Acetyl-(L)-cystein
c) 4,0 g *N*-Acetyl-(L)-cystein

befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo® 52 (Fa. DuPont), nach 1,30 h 0,4 g Vazo® 52 und nach 2 h 0,6 g Vazo® 52 hinzugeben. Nach 4 h wurden mit 150 g Aceton verdünnt. Nach 24 und nach 36 erfolgte eine Zugabe von jeweils 0,4 g Perkadox® 16 (Fa. Akzo). Nach 48 h Reaktionszeit

wurde die Polymerisation abgebrochen und auf Raumtemperatur abgekühlt. Das Polymerisat wurde mit den Testmethoden C, E und F analysiert.

**Beispiel 2 (Referenz)**

Ein für radikalische Polymerisationen konventioneller 2 L-Glasreaktor wurde mit 4 g Acrylsäure, 4 g Maleinsäureanhydrid, 32 g N-tert-Butylacrylamid, 180 g 2-Ethylhexylacrylat, 180 g n-Butylacrylat und 150 g Aceton/Isopropanol (97:3) befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo® 52 (Fa. DuPont), nach 1,30 h 0,4 g Vazo® 52 und nach 2 h 0,6 g Vazo® 52 hinzugeben. Nach 4 h wurden mit 150 g Aceton/Isopropanol (97:3) verdünnt. Nach 6 und nach 8 h erfolgte eine Zugabe von jeweils 0,4 g Perkadox® 16 (Fa. Akzo). Nach 12 h Reaktionszeit wurde die Polymerisation abgebrochen und auf Raumtemperatur abgekühlt. Das Polymerisat wurde mit den Testmethoden C, E und F analysiert.

**Beispiel 3 (Referenz)**

Ein für radikalische Polymerisationen konventioneller 2 L-Glasreaktor wurde mit 4 g Acrylsäure, 4 g Maleinsäureanhydrid, 32 g N-tert-Butylacrylamid, 180 g 2-Ethylhexylacrylat, 180 g n-Butylacrylat und 150 g Aceton befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo® 52 (Fa. DuPont), nach 1,30 h 0,4 g Vazo® 52 und nach 2 h 0,6 g Vazo® 52 hinzugeben. Nach 4 h vergelte der Ansatz und die Polymerisation wurde abgebrochen.

**Beispiel 4a-c**

Ein für radikalische Polymerisationen konventioneller 2 L-Glasreaktor wurde mit 4 g Acrylsäure, 4 g Maleinsäureanhydrid, 32 g N-tert-Butylacrylamid, 180 g 2-Ethylhexylacrylat, 180 g n-Butylacrylat, 150 g Aceton und

a) 0,2 g Dodecanthiol
b) 0,4 g Dodecanthiol
c) 4,0 g Dodecanthiol

befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo® 52 (Fa. DuPont), nach 1,30 h 0,4 g Vazo® 52 und nach 2 h 0,6 g Vazo® 52 hinzugeben. Nach 4 h wurden mit 150 g Aceton verdünnt. Nach 24 und nach 36 erfolgte eine Zugabe von jeweils 0,4 g Perkadox® 16 (Fa. Akzo). Nach 48 h Reaktionszeit wurde die Polymerisation abgebrochen und auf Raumtemperatur abgekühlt. Das Polymerisat wurde mit den Testmethoden C, E und F analysiert.

**Beispiel 5a-c**

Ein für radikalische Polymerisationen konventioneller 2 L-Glasreaktor wurde mit 4 g Acrylsäure, 4 g Maleinsäureanhydrid, 32 g N-tert-Butylacrylamid, 180 g 2-Ethylhexylacrylat, 180 g n-Butylacrylat, 150 g Aceton und

a) 0,2 g Thiocure® PETMP
b) 0,4 g Thiocure® PETMP
c) 4,0 g Thiocure® PETMP

(Thiocure® PETMP: Pentaerithrytoltetra-(3-mercaptopropionat), Fa. Bruno Boch Thio Chemicals) befüllt. Nach 45 Minuten Durchleiten mit Stickstoffgas unter Rühren wurde der Reaktor auf 58 °C hochgeheizt, anschließend wurden 0,2 g Azoisobutyronitril (AIBN) hinzugegeben. Nach einer Stunde Reaktionszeit wurden 0,2 g Vazo® 52 (Fa. DuPont), nach 1,30 h 0,4 g Vazo® 52 und nach 2 h 0,6 g Vazo® 52 hinzugeben. Nach 4 h wurden mit 150 g Aceton verdünnt. Nach 24 und nach 36 erfolgte eine Zugabe von jeweils 0,4 g Perkadox® 16 (Fa. Akzo). Nach 48 h Reaktionszeit wurde die Polymerisation abgebrochen und auf Raumtemperatur abgekühlt. Das Polymerisat wurde mit den Testmethoden C, E und F analysiert.

**Resultate**

Um einen Vergleich der Aktivitäten des Reglers zu ermöglichen, wurde mit Hilfe der Mayo-Gleichung (G2)

$$\frac{1}{P_n} = \frac{1}{P_{n,0}} + C_{tr} \cdot \frac{[Regler]}{[Monomer]} \qquad (G2)$$

die Kettenübertragungskonstante bestimmt, wobei $P_n$ der Polymerisationsgrad, $P_{n,0}$ der Polymerisationsgrad der ungeregelten Reaktion, [Regler] die Konzentration des Kettenreglers, [Monomer] die Monomerkonzentration und $C_{tr}$ die Kettenübertragungskonstante ist.

Die Ergebnisse der Polymerisationen sind in Tabelle 1 aufgelistet.

**Tabelle 1**

| Beispiel | $M_w$ | PD | K-Wert | $C_{tr}$ | Umsatz |
|---|---|---|---|---|---|
| 1a | 115.000 | 5,35 | 62,3 | 0,90 | 99,1 % |
| 1b | 120.000 | 4,36 | 53,1 | | 99,2 % |
| 1c | 25.700 | 2,12 | 22,0 | | 99,1 % |
| 2 | 486.000 | 7,60 | 72,2 | $1{,}5.10^{-3}$ | 99,4 % |
| 3 | - | - | - | - | - |
| 4a | 88.200 | 8,68 | 64,6 | 0,49 | 99,2 % |
| 4b | 133.000 | 4,76 | 57,1 | | 99,4 % |
| 4c | 31.300 | 2,69 | 26,8 | | 98,9 % |
| 5a | 103.000 | 20,26 | 89,9 | 0,78 | 99,3 % |
| 5b | 171.000 | 6,57 | 67,1 | | 99,0 % |
| 5c | 49.400 | 2,12 | 30,2 | | 98,2 % |

$M_w$: mittleres Molekuargewicht (Gewichtsmittel) [g/mol]
PD: Polydispersität, $C_{tr}$: Kettenübertragungskonstante

Tabelle 1 belegt, dass eine Polymerisation in reinem Lösemittel (Beispiel 3) mit Problemen behaftet ist. Zum Erreichen eines hohen Umsatzes wird eine relativ große Menge Initiator benötigt, wobei nach bereits 4 h Reaktionszeit der Ansatz vergelt ist und die Polymerisation abgebrochen werden muss. Die Polymerisationen der Beispiele 1, 2, 4 und 5 belegen, dass Regler die Vergelung verhindern und sich dennoch hohe Umsätze von > 98 % durch eine Initiierung in mehreren Stufen und mit mehreren Initiatoren realisieren lassen. Dennoch eignen sich Alkohole, wie z.B. Isopropanol, nur bedingt, da dieser Regler nicht in die Haftklebemasse eingebaut wird und somit im Lösemittel verbleibt. Zur Aufkonzentration zum Hotmelt muss im Niederdruck ein Lösemittelgemisch abdestilliert. Der Durchsatz wird hier durch einen sich verändernden Siedepunkt stark vermindert.
Thiole (Beispiele 1, 4 und 5) werden dagegen während des Polymerisationsprozesses im Polymer eingebaut und beeinträchtigen nicht den Aufkonzentrationsprozess. Neben diesen Kriterien sind ebenfalls das erzielbare mittlere Molekulargewicht und die Molekulargewichtsverteilung (Dispersität) von entscheidender Bedeutung für die klebtechnischen Eigenschaften. Die Beispiele 1a-c belegen, dass Thiolgruppen enthaltende Verbindungen der Strukturformel (A) wie N-Acetyl-(L)-cystein die effizientesten Regler sind und somit die geringste Polydispersität für die entsprechende Polyacrylathaftklebemasse erreichen. Weiterhin sind solche Verbindungen der Strukturformel (A) im Gegensatz zu Dodecanthiol nicht toxisch, wodurch der Umgang mit solchen Verbindungen als auch das Verbleiben von Spuren in der Polyacrylatmasse unbedenklich sind. Das tetrafunktionelle Thiol PETMP führt zu einer starken Vernetzung des Polymers, wodurch sich ebenfalls Nachteile im Aufkonzentrationsprozess ergeben würden.

**Herstellung der Ausgangspolymere für die Beispiele PSA B1 bis B4**

Im Folgenden wird die Präparation der Ausgangspolymere beschrieben. Die untersuchten Polymere werden konventionell über eine freie radikalische Polymerisation in Lösung hergestellt. Für die erste Polymerisation der jeweiligen

Basispolymere P1 bis P4 wird frisches Lösungsmittel verwendet, alle weiteren Polymerisationen werden mit dem nach Verfahren 1 wiedergewonnenen Lösungsmittel bzw. Lösungsmittelgemisch durchgeführt.

Basispolymer P1 (Vergleichsbeispiel)

Ein für radikalische Polymerisationen konventioneller Reaktor wurde mit 27 kg 2-Ethylhexylacrylat, 67 kg n-Butylacrylat, 3 kg Methylacrylat, 3 kg Acrylsäure und 66 kg Aceton/Isopropanol (95:5) befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Aceton/Isopropanol Gemisch verdünnt.
Nach 5 h 30 min sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen Umsatz von 99,6 %, einen K-Wert von 76,0, einen Feststoffgehalt von 54 %, ein mittleres Molekulargewicht von Mw = 760.000 g/mol, Polydispersität PD (Mw/Mn) = 9,6.

Basispolymer P2 (*N*-Acetyl-(L)-cystein)

Ein für radikalische Polymerisationen konventioneller Reaktor wurde mit 27 kg 2-Ethylhexylacrylat, 67 kg n-Butylacrylat, 3 kg Methylacrylat, 3 kg Acrylsäure, 50 g *N*-Acetyl-(L)-cystein und 66 kg Aceton befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Aceton verdünnt.
Nach 5 h 30 min sowie nach 7 h wurde jeweils mit 150 g Bis-(4-*tert*-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen Umsatz von 99,7 %, einen K-Wert von 75,8, einen Feststoffgehalt von 54 %, ein mittleres Molekulargewicht von Mw = 755.000 g/mol, Polydispersität PD (Mw/Mn) = 4,7.

Basispolymer P3 (*rac*-*N*-Acetylcysteinmethylester)

Ein für radikalische Polymerisationen konventioneller Reaktor wurde mit 27 kg 2-Ethylhexylacrylat, 67 kg n-Butylacrylat, 3 kg Methylacrylat, 3 kg Acrylsäure, 55 g *rac*-*N*-Acetylcysteinmethylester und 66 kg Aceton befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Aceton verdünnt.
Nach 5 h 30 min sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen Umsatz von 99,5 %, einen K-Wert von 75,7, einen Feststoffgehalt von 54 %, ein mittleres Molekulargewicht von Mw = 751.000 g/mol, Polydispersität PD (Mw/Mn) = 5,1.

Basispolymer P4 (Dodecanthiol)

Ein für radikalische Polymerisationen konventioneller Reaktor wurde mit 27 kg 2-Ethylhexylacrylat, 67 kg n-Butylacrylat, 3 kg Methylacrylat, 3 kg Acrylsäure, 62 g Dodecanthiol und 66 kg Aceton befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Aceton verdünnt.
Nach 5 h 30 min sowie nach 7 h wurde jeweils mit 150 g Bis-(4-*tert*-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen Umsatz von 99,6 %, einen K-Wert von 76,3, einen Feststoffgehalt von 54 %, ein mittleres Molekulargewicht von Mw = 768.000 g/mol, Polydispersität PD (Mw/Mn) = 5,2.

**Verfahren 1: Aufkonzentration / Herstellung der Schmelzhaftkleber:**

Die Acrylatcopolymere (Basispolymere P1 bis P4) werden mittels Einschneckenextruder (Aufkonzentrationsextruder, BERSTORFF GmbH, Deutschland) weitestgehend vom Lösemittel befreit (Restlösemittelgehalt ≤ 0,3 Gew.-%; vgl. bei den einzelnen Beispielen). Das Lösungsmittel wird kondensiert und ohne weiter Aufreinigung erneut für die

Polymerisation von P1 bis P4 verwendet, wobei zur Kontrolle nach jeder Polymerisation der K-Wert nach Testmethode F bestimmt wurde, um sicherzustellen, dass Haftklebemassen mit den gleichen Eigenschaften hergestellt werden. Die Drehzahl der Schnecke betrug 150 U/min, der Motorstrom 15 A, es wurde ein Durchsatz von 58,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

**Verfahren 2: Herstellung der modifizierten Schmelzhaftkjeber**

Die nach dem oben erläuterten Verfahren 1 hergestellten Acrylatschmelzhaftkleber wurden direkt in einen nachgeschalteten WELDING-Doppelschneckenextruder (WELDING Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurde das Harz Dertophene® T110 (DRT RESINS, Frankreich) in Zone 1 zudosiert und homogen eingemischt. Die Drehzahl betrug 451 U/min, der Motorstrom 42 A, es wurde ein Durchsatz von 30,1 kg/h realisiert. Die Temperaturen der Zonen 1 und 2 betrugen jeweils 105 °C, die Schmelzetemperatur in Zone 1 betrug 117 °C und die Massetemperatur bei Austritt (Zone 3) bei 100 °C.

**Verfahren 3: Herstellung der erfindungsgemäßen Klebebänder, Abmischung mit dem Vernetzersystem für die thermischen Vernetzung und Beschichtung**

Die nach den Verfahren 1 - 2 hergestellten Acrylatschmelzhaftkleber wurden in einem Fütterextruder (Einschneckenförderextruder der Firma TROESTER GmbH & Co KG, Deutschland) aufgeschmolzen und mit diesem als Polymerschmelze in einen Doppelschneckenextruder 1.3 (vgl. Fig. 1) gefördert (Fa. LEISTRITZ, Deutschland, Bez. LSM 30/34). Das Aggregat wird von außen elektrisch beheizt und über verschiedene Gebläse luftgekühlt und ist so konzipiert, dass bei guter Verteilung des Vernetzers Polypox R16 (Pentaerythritpolyglycidether, CAS-Nr.: 3126-63-4, tetrafunktionelles Epoxid der Fa. UPPC AG, Deutschland) sowie des Beschleunigers Polypox H205 (Polyoxypropylendiamin, CAS-Nr.: 9046-10-0, Aminhärter der Fa. UPPC AG, Deutschland) in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe des jeweiligen Vernetzers und Beschleunigers erfolgt mit geeignetem Dosierequipment gegebenenfalls an mehreren Stellen (vgl. Fig.1: Dosierstellen 1.1 und 1.2) und gegebenenfalls unter Verwendung von Dosierhilfsmitteln in die druckfreien Förderzonen des Doppelschneckenextruders.
Nach Austritt der fertig compoundierten, d.h. mit dem Vernetzer und Beschleuniger abgemischten Klebmasse aus dem Doppelschneckenextruder (Austritt: Runddüse, 5 mm Durchmesser), erfolgt die Beschichtung nach Fig.1 auf ein bahnförmiges Trägermaterial auf der Beschichtungswalze (BW). Die Zeit zwischen Zudosierung des Vernetzer-Beschleuniger-Systems bis zum Ausformen bzw. Beschichten wird als Verarbeitungszeit bezeichnet. Die Verarbeitungszeit gibt den Zeitraum an, in welcher die mit dem Vernetzer- bzw. Vernetzer-Beschleuniger-System abgemischte Klebmasse mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze (RW) des 2-Walzenauftragswerks wird nicht angetrieben.

Beispiele B1-B4

Die Basispolymere P1 - P4 werden gemäß dem beschriebenen Polymersationsverfahren polymerisiert, gemäß Verfahren 1 aufkonzentriert (Feststoffgehalt 99,8 %) und von einer Probe des unvernetzten Polymers der K-Wert bestimmt, um nachzuweisen, dass keine Rückstände sich im Lösungsmittelrecyklat befinden, die eine die Molmasse regelnde Funktion aufweisen. Anschließend wurden gemäß Verfahren 2 die Massen mit Harz Dertophene® T110 abgemischt und diese harzmodifizierten Acrylat-Hotmeltmassen dann gemäß Verfahren 3 kontinuierlich mit dem Vernetzer-Beschleuniger-System compoundiert.
Beispielhafte detaillierte Beschreibung: In dem in Verfahren 3 beschriebenen Doppelschneckenextruder wurde ein Gesamtmassestrom bestehend aus 70 Teilen Polymer P1 und 30 Teilen Harz Dertophene® T110 von 533,3 g/min (das entspricht 373 Gramm des reinen Polymers pro Minute) mit 0,45 Gew.-% (bezogen auf Polymer fest) des Epoxidvernetzers Polypox R16 sowie 0,72 Gew.-% (bezogen auf Polymer fest) des Beschleunigers Polypox H205 abgemischt. Die Dosierung des Beschleunigers erfolgte über eine Schlauchpumpen an Dosierstelle 1.1 (sieh Fig.1) und die des Vernetzers ebenfalls über eine Schlauchpumpe an Dosierstelle 1.2.
Die Verarbeitungszeit des fertigen Compounds war größer 10 min bei einer durchschnittlichen Massetemperatur von 125 °C nach dem Verlassen des LEISTRITZ-Doppelschneckenextruders. Die Beschichtung erfolgt an einem 2-Walzenauftragswerk gemäß Fig. 1 bei Walzenoberflächentemperaturen von jeweils 100 °C und einem Masseauftrag von 110 g/m$^2$ auf 23 $\mu$m PET-Folie.

**Resultate**

Die Beispiele B1 bis B4 wurden insgesamt zehnmal durchgeführt, wobei für die Polymerisation immer das mittels Destillation im Verfahren 1 wiedergewonnene Lösungsmittel verwendet wurde, um nachzuweisen, dass keine Rückstände des Reglers mehr im Lösungsmittel vorhanden sind. Die K-Werte wurden nach jeder Aufkonzentration des Polymers nach der Testmethode F bestimmt (K1 bis K10 für den jeweiligen Polymerisationsansatz). Zur klebtechnischen Ausprüfung der Beispiele 1 bis 4 wurden die Testmethoden A und B durchgeführt.

Die Ergebnisse der Polymerisationen sind in Tabelle 2 aufgelistet.

**Tabelle 2**

| Beispiel | K1 | K2 | K3 | K4 | K5 | K6 | K7 | K8 | K9 | K10 |
|---|---|---|---|---|---|---|---|---|---|---|
| B1 | 76,0 | 76,1 | 76,3 | 76,5 | 76,8 | 77,0 | 77,4 | 77,7 | 78,0 | 78,4 |
| B2 | 75,8 | 75,8 | 75,9 | 75,8 | 75,8 | 75,9 | 75,7 | 75,8 | 75,7 | 75,8 |
| B3 | 75,7 | 75,8 | 75,7 | 75,7 | 75,7 | 75,8 | 75,9 | 75,7 | 75,7 | 75,7 |
| B4 | 76,3 | 76,3 | 76,2 | 76,1 | 76,1 | 75,9 | 75,9 | 75,8 | 75,9 | 75,7 |

Tabelle 2 belegt, dass die Wiederverwertung des Lösungsmittelsdestillats bestehend aus Aceton und Isopropanol (Beispiel 1) mit Problemen behaftet ist. Das Isopropanol hat die Eigenschaft eines Kettenreglers, wird aber aufgrund des niedrigeren Dampfdrucks verglichen mit Aceton mit jedem Destillationszyklus abgereichert, wodurch sich die Molmasse des im Anschluss an die Destillation mit dem Lösungsmittelrecyklat durchgeführten Polymerisation sich die Molmassen und somit der K-Wert erhöhen. Dies würde bedeuten, dass nach jeder Destillation das Verhältnis von Isopropanol zu Aceton überprüft und notfalls wieder neu eingestellt werden müsste, um des weiteren Polymere mit einer gleichen Molamssenverteilung zu erhalten.

Die Polymerisationen der Beispiele 2 und 3 belegen, dass Aminosäuren, bei denen es sich um Feststoffe handelt, als Regler eignen und dass sich auch nach mehrmaliger Wiederverwertung des Lösungsmittelrecyklats der K-Wert im Rahmen der Messgenauigkeit sich nicht verändert.

Ähnlich Ergebnisse konnten auch mit Dodecanthiol als Regler festgestellt werden, jedoch ist die Tendenz erkennbar, dass die K-Werte mit der Zeit sinken, was auf eine Erniedrigung der Molmasse hindeutet. Trotz des niedrigen Dampfdrucks wird wahrscheinlich ein gewisser Anteil an Dodecanthiol, bei dem es sich um eine Flüssigkeit handelt, mit dem Lösungsmittel mitgeschleppt und reichert sich somit langsam im Recyklat an.

Das erfindungsgemäße Reglerkonzept zur Verbesserung des Lösungsmittelrecyclings für die Polymerisation konnte somit bewiesen werden.

In Tabelle 3 sind die Klebkräfte auf Stahl sowie die Scherstandzeiten für den jeweils ersten Ansatz gezeigt.

**Tabelle 3**

| Beispiel | SSZ RT 10 N | KK-Stahl [N/cm] |
|---|---|---|
| 1.1 | 4150 | 6,6 |
| 2.1 | 3180 | 6,8 |
| 3.1 | 3100 | 6,8 |
| 4.1 | 3150 | 6,9 |

Masseauftrag: 110g/m$^2$.
SSZ: Scherstandzeiten [min]
KK: Klebkraft auf Stahl

Mit der mittels Isopropanol geregelten Masse wurde die höchste Scherfestigkeit im Vergleich zu den anderen Polymerisationsreglern erreicht, die aber nicht wesentlich schlechter sind. Im Allgemeinen konnte gezeigt werden, dass mit allen Reglern ähnliche klebtechnische Eigenschaften erreicht werden konnten.

Den Vorteil der erfindungsgemäßen Regler soll im Folgenden durch weitere Beispiele unterlegt werden.

Die weiteren klebtechnischen Ausprüfungen der Beispiele 1.10 - 4.10 wurden erneut die Testmethoden A und B durchgeführt, wobei die Muster verwendet wurden, deren Polymere mit dem zehnmal wieder verwendeten Lösungsmittel polymerisiert wurden. Außerdem wurde die Fließviskosität nach Testmethode D bestimmt. Die Ergebnisse der

Polymerisationen sind in Tabelle 4 aufgelistet.

| Tabelle 4 | | | |
|---|---|---|---|
| Beispiel | SSZ (RT, 10 N) | KK-Stahl [N/cm] | η[Pa*s] bei 130 °C und 1 rad/s |
| 1.10 | 4620 | 5,9 | 5800 |
| 2.10 | 3200 | 6,9 | 4800 |
| 3.10 | 3150 | 6,8 | 4800 |
| 4.10 | 3010 | 6,9 | 4600 |
| Masseauftrag: 110g/$m^2$<br>SSZ: Scherstandzeiten [min]<br>KK: Klebkraft auf Stahl<br>η: Fließviskosität nach Test D | | | |

Anhand dieses Beispiels ist der Vorteil des erfindungsgemäßen Reglersystems sehr gut zu erkennen. Aufgrund der sich ändernden Molmasse im Beispiel 1.10 verändern sich die klebtechnischen Eigenschaften verglichen mit denen von Beispiel 1.1 sehr deutlich. Die anderen Regler ergaben Muster mit reproduzierbaren klebtechnischen Daten, wobei in Beispiel 4.10 die Scherfestigkeit aufgrund der niedriger werdenden Molmasse leicht sinkt und auch die Viskosität im Vergleich zu den mit Aminosäuren geregelten Massen niedriger ist.

## Patentansprüche

**1.** Verfahren zur Herstellung einer Haftklebemasse,

- wobei ein Polyacrylat aus einer Reaktionslösung umfassend ein oder mehrere Lösungsmittel und ein oder mehrere Monomere durch radikalische Polymerisation hergestellt wird,
- wobei die Lösungsmittel zumindest zu 50 Gew.-% organische Lösungsmittel sind, und wobei weiterhin die Monomere zumindest zu 70 Gew.-% Acrylsäure- und/oder Methacrylsäureester sind,
- wobei in der Reaktionslösung weiterhin zumindest ein Polymerisationsregler enthalten ist,

**dadurch gekennzeichnet, dass**

- zumindest eines der eingesetzten organischen Lösungsmittel, insbesondere alle organischen Lösungsmittel aus einem Recyclingprozess entnommen werden,
- als Polymerisationsregler eine Verbindung gemäß der folgenden allgemeinen Strukturformel

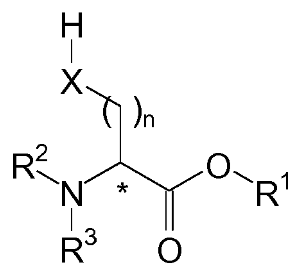

eingesetzt wird,
worin

- $R^1$, $R^2$ und $R^3$ unabhängig voneinander gewählt sind,
- $R^1$ gewählt ist aus der Gruppe (i) aus linearen und verzweigten $C_1$- bis $C_{18}$-Alkylresten, linearen und verzweigten $C_2$- bis $C_{18}$-Alkenylresten, linearen und verzweigten $C_2$- bis $C_{18}$-Alkinylresten, Arylresten, cycloaliphatischen, aliphatischen und aromatischen Heterocyclen, Wasserstoff,
- $R^2$ und $R^3$ gewählt sind aus der Gruppe (i) oder aus Gruppe (ii) aus Acylresten, insbesondere Alkanoylresten und Cycloalkancarbonylresten und Arencarbonylresten (-C(O)-R'), Alkoxycarbonylresten (-C(O)-O-R'), Carbamoyl-resten (-C(O)-NR'R"), Sulfonylresten ($-SO_2R'$), wobei R' und R" unabhängig voneinander gewählte Reste aus der Gruppe i) sind,
- X Sauerstoff (O), Schwefel (S) oder Selen (Se) ist,
- n eine natürliche Zahl einschließlich Null ist,

• das Lösungsmittel aus dem Polymerisationsprodukt nach der Polymerisation bis zu einem Restlösungsmittelanteil von nicht mehr als 2 % entfernt wird, wobei der Polymerisationsregler bei der Entfernung des Lösungsmittels in dem Polymerisationsprodukt verbleibt,
• das entfernte Lösungsmittel dem Recyclingprozess zugeführt wird,
• und das Polymerisationsprodukt aus der Schmelze weiterverarbeitet wird.

**2.** Verfahren nach Anspruch 1, **dadurch gekennzeichnet, dass** die Lösungsmittel zumindest zu 90 Gew.-%, insbesondere zu 100 Gew.-% organische Lösungsmittel sind.

**3.** Verfahren nach einem der vorangehenden Ansprüche, **dadurch gekennzeichnet, dass** die Reaktionslösung eine homogene Lösung ist.

**4.** Verfahren nach einem der vorangehenden Ansprüche, **dadurch gekennzeichnet, dass** n im Bereich $0 \leq n \leq 18$ liegt.

**5.** Verfahren nach einem der vorangehenden Ansprüche, **dadurch gekennzeichnet, dass** das bzw. die Acryl- bzw. Methacrylsäureester der allgemeinen Formel

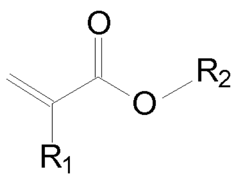

genügen, wobei

$R_1$ = H oder $CH_3$
und
$R_2$ = H oder ein unverzweigter oder verzweigter, aliphatischer, alicyclischer oder aromatischer, unsubstituierter oder substituierter Kohlenwasserstoffrest mit 1 bis 20 Kohlenstoffatomen ohne C=C-Doppelbindungen ist.

## Claims

**1.** Process for preparing a pressure-sensitive adhesive,

• where a polyacrylate is prepared from a reaction solution comprising one or more solvents and one or more monomers by free-radical polymerization,
• where at least 50% by weight of the solvents are organic solvents, and where additionally at least 70% by weight of the monomers are acrylic and/or methacrylic esters,
• where the reaction solution further comprises at least one chain transfer agent,

**characterized in that**

• at least one of the organic solvents used, more particularly all of the organic solvents, are taken from a recycling operation,
• the chain transfer agent used comprises a compound of the following general structural formula

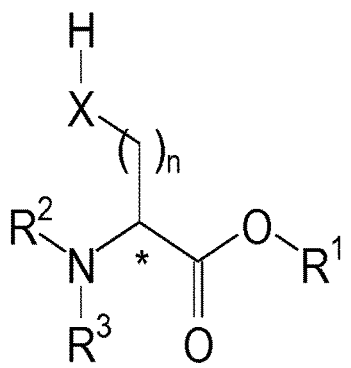

in which

- $R^1$, $R^2$ and $R^3$ are selected independently of one another,
- $R^1$ is selected from the group (i) of linear and branched $C_1$ to $C_{18}$ alkyl radicals, linear and branched $C_2$ to $C_{18}$ alkenyl radicals, linear and branched $C_2$ to $C_{18}$ alkynyl radicals, aryl radicals, cycloaliphatic, aliphatic and aromatic heterocycles, and hydrogen,
- $R^2$ and $R^3$ are selected from the group (i) or from group (ii) of acyl radicals, more particularly alkanoyl radicals, and cycloalkanecarbonyl radicals and arenecarbonyl radicals (-C(O)-R'), alkoxycarbonyl radicals (-C(O)-O-R'), carbamoyl radicals (-C(O)-NR'R"), and sulphonyl radicals ($-SO_2R'$), where R' and R" are radicals from the group i) that are selected independently of one another,
- X is oxygen (O), sulphur (S) or selenium (Se),
- and n is a natural number including zero,

• the solvent is removed from the polymerization product after the polymerization down to a residual solvent fraction of not more than 2%, and the chain transfer agent remains in the polymerization product when the solvent is removed,
• the solvent removed is supplied to the recycling operation,
• and the polymerization product is processed further from the melt.

2. Process according to Claim 1, **characterized in that** at least 90%, more particularly 100%, by weight of the solvents are organic solvents.

3. Process according to either of the preceding claims, **characterized in that** the reaction solution is a homogeneous solution.

4. Process according to any of the preceding claims, **characterized in that** n is in the range $0 \leq n \leq 18$.

5. Process according to any of the preceding claims, **characterized in that** the acrylic and/or methacrylic ester or esters satisfy the general formula

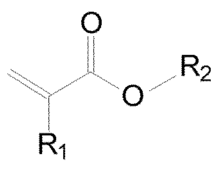

where

$R_1$ = H or $CH_3$
and
$R_2$ = H or an unbranched or branched, aliphatic, alicyclic or aromatic, unsubstituted or substituted hydrocarbon radical having 1 to 20 carbon atoms without C=C double bonds.

## Revendications

1. Procédé de fabrication d'un matériau adhésif sensible à la pression,

    - selon lequel un polyacrylate est fabriqué à partir d'une solution de réaction comprenant un ou plusieurs solvants et un ou plusieurs monomères, par polymérisation radicalaire,
    - les solvants étant des solvants organiques à hauteur d'au moins 50 % en poids et les monomères étant par ailleurs des esters de l'acide acrylique et/ou de l'acide méthacrylique à hauteur d'au moins 70 % en poids,
    - au moins un régulateur de polymérisation étant en outre contenu dans la solution de réaction,

    **caractérisé en ce que**

    - au moins un des solvants organiques utilisés, notamment tous les solvants organiques, sont extraits d'un procédé de recyclage,
    - un composé selon la formule structurale générale suivante est utilisé en tant que régulateur de polymérisation :

    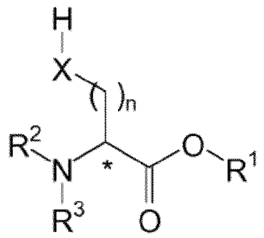

    dans laquelle

    - $R^1$, $R^2$ $_e$t $R^3$ sont choisis indépendamment les uns des autres,
    - $R^1$ est choisi dans le groupe (i) constitué par les radicaux alkyle en $C_1$ à $C_{18}$ linéaires et ramifiés, les radicaux alcényle en $C_2$ à $C_{18}$ linéaires et ramifiés, les radicaux alcynyle en $C_2$ à $C_{18}$ linéaires et ramifiés, les radicaux aryle, les hétérocycles cycloaliphatiques, aliphatiques et aromatiques, l'hydrogène,
    - $R_2$ et $R^3$ sont choisis dans le groupe (i) ou dans le groupe (ii) constitué par les radicaux acyle, notamment les radicaux alcanoyle et les radicaux cycloalcane-carbonyle et les radicaux arène-carbonyle (-C(O)-R'), les radicaux alcoxycarbonyle (-C(O)-O-R'), les radicaux carbamoyle (-C(O)-NR"R"), les radicaux sulfonyle ($-SO_2R'$), R' et R" étant des radicaux choisis indépendamment l'un de l'autre dans le groupe i),
    - X représente l'oxygène (O), le soufre (S) ou le sélénium (Se),
    - n représente un nombre naturel, y compris zéro,
    - le solvant est éliminé du produit de polymérisation après la polymérisation jusqu'à une proportion de solvant résiduelle non supérieure à 2 %, le régulateur de polymérisation restant dans le produit de polymérisation lors de l'élimination du solvant,
    - le solvant éliminé est introduit dans le procédé de recyclage,
    - et le produit de polymérisation est transformé à partir de la masse fondue.

2. Procédé selon la revendication 1, **caractérisé en ce que** les solvants sont des solvants organiques à hauteur d'au moins 90 % en poids, notamment à hauteur de 100 % en poids.

3. Procédé selon l'une quelconque des revendications précédentes, **caractérisé en ce que** la solution de réaction est une solution homogène.

4. Procédé selon l'une quelconque des revendications précédentes, **caractérisé en ce que** n se situe dans la plage $0 \leq n \leq 18$.

5. Procédé selon l'une quelconque des revendications précédentes, **caractérisé en ce que** le ou les esters de l'acide acrylique ou méthacrylique satisfont la formule générale

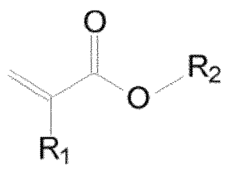

dans laquelle

$R_1$ = H ou $CH_3$,
et
$R_2$ = H ou un radical hydrocarboné non ramifié ou ramifié, aliphatique, alicyclique ou aromatique, non substitué ou substitué, de 1 à 20 atomes de carbone, sans doubles liaisons C=C.

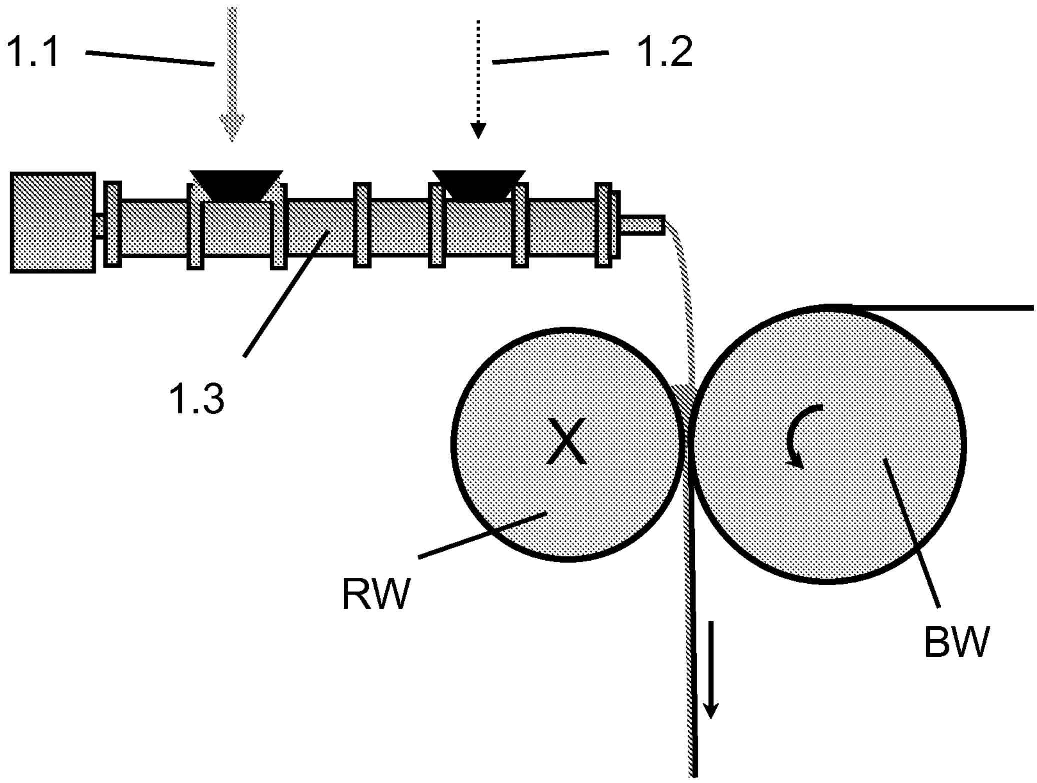


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5073611 A
- EP 0621326 B1
- US 7034085 B2
- US 20070299226 A1
- EP 1311554 B1
- WO 9920669 A
- EP 1484342 A
- DE 4340297 A1


### In der Beschreibung aufgeführte Nicht-Patentliteratur


- **H.-G. ELIAS.** Makromoleküle. Hüthig & Wepf Verlag Basel, 1990
- **T.G. FOX.** *Bull. Am. Phys. Soc.,* 1956, vol. 1, 123
- **HOUBEN WEYL.** *Methoden der Organischen Chemie,* vol. E 19a, 60-147
- *Journal of Polymer Science, Polymer Chemistry Edition,* 1976, vol. 14, 1495-1511
- **DONATAS SATAS.** Handbook of Pressure Sensitive Adhesive Technology. 1989
- *Polymer,* 1967, vol. 8, 381
- *CHEMICAL ABSTRACTS,* 3126-63-4